(19)

Europäisches Patentamt
European Patent Office
Office européen des brevets

(11) **EP 4 495 899 A1**

(12) **EUROPEAN PATENT APPLICATION**

(43) Date of publication:
**22.01.2025  Bulletin 2025/04**

(21) Application number: **23315289.1**

(22) Date of filing: **21.07.2023**

(51) International Patent Classification (IPC):
**G06V 40/40** (2022.01)    **G06V 10/143** (2022.01)
**G06V 40/16** (2022.01)    **G06V 10/82** (2022.01)

(52) Cooperative Patent Classification (CPC):
**G06V 40/40; G06V 10/143; G06V 10/82; G06V 40/165**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **THALES DIS FRANCE SAS**
**92190 Meudon (FR)**

(72) Inventors:
• **Anghelone, David**
  **74300 Cluses (FR)**
• **Lannes, Sarah**
  **91400 Orsay (FR)**

(74) Representative: **Quintero Romero, Manuel**
  **Thales Dis France SAS**
  **Intellectual Property Department**
  **6, rue de la Verrerie**
  **92190 Meudon (FR)**

(54) **LIVENESS DETERMINATION BASED ON DOMAIN TRANSLATION OF A THERMAL IMAGE**

(57)    The invention provides a presentation attack detection method comprising the steps of:
- receiving (801) at least one thermal image from a thermal camera;
- determining (802) whether a face of a target person is detected in the thermal image or not;
- if the face of the target person is detected in the thermal image, performing (806) a domain translation based on the thermal image to obtain an image in a second spectral domain, the second spectral domain being distinct form a thermal domain;
- determining (807) a first category indicating whether the target person is live or spoof, based on the image in the second spectral domain;
- determining (808) a final decision representative of the liveness of the target person, based on the determined first category and/or based on whether the face of the target person is detected in the thermal image.

FIG. 7

**Description**

## TECHNICAL FIELD

This invention is related to the field of face processing, and more particularly, to face presentation attack detection, which aims at determining whether a face is real/live, from a target person at a point of capture, or spoof/fake.

## BACKGROUND OF THE INVENTION

More and more applications and services now rely on a prior step of Face Recognition, FR, to ensure that a user is authorized to use a resource such as a service/application.

This is the case for example in the domain of telecommunications, when unlocking a phone for example, when accessing to a physical place, for example in airports, in biometric systems for identity verification or in digital identification, for example for banking services. In the above-mentioned services, face recognition is becoming one of the preferred biometric modality.

Once the face of a user is captured, image frames are generally processed and compared with stored images labelled with user identities, so as to infer the identity of a user.

To access services/applications of the genuine person, attackers may implement Presentation Attacks, noted PAs hereafter. PAs may consist in presenting face spoof to the recognition system.

To counteract these PAs, presentation attack detection methods have been developed and are applied prior to face recognition, to ensure that the genuine person that is subjected to recognition is real and live, and not spoof.

Some presentation attack detection methods or systems are called active, where they require the target person to perform a series of one or several instructions, requesting some type of cooperative behaviour, such as blinking of the eyes, mouth/lip movement and/or turning of the head.

However, active methods/systems have the drawback to be obtrusive, which is a problem in security applications where a target person needs to be recognized without noticing it. In contrast, passive presentation attack detection does not require any cooperation from the target person, so are unobtrusive, and processes images or frames that are acquired by a capture device, such as a camera.

Modern methods of facial PA are creating issues for FR systems and are therefore a major concern of vulnerability for services/applications relying on them. Indeed, modern methods of facial PA benefit from the ubiquity and high quality of instruments, named PAI for Presentation Attack Instruments hereafter, which include:

- pictures, either printed or cut-out;
- more complex PAIs such as video-replay or folded paper masks;
- expensive and advanced PAIs such as silicone or latex full face masks.

Current presentation attack detection methods are adapted to the sensor that is available in each FR system. Most presentation attack detection methods have to rely on standard Red Green Blue, RGB, cameras only, or on Near InfraRed, NIR, cameras.

It is to be noted that infrared spectrum includes four spectral bands: NIR, "short-wave infrared" SWIR, "medium-wave infrared" MWIR and "long-wave infrared" LWIR. Both MWIR and LWIR are also known as "thermal".

However, presentation attack detection methods based on RGB cameras lack efficiency in detecting PAs that are based on well-crafted video replay attacks.

Other methods are implemented in FR systems comprises Time of Flight cameras or structured light. These sensors have the benefit of adding three-dimensional, 3D, information to analyse, making the detection of PAIs such as pictures, much easier.

However, these sensors are very costly, and they also lose their interest when the target person is distant. They are also difficult to combine with passive presentation attack detection methods.

The publication "A Study on Presentation Attack Detection in Thermal Infrared", Kowalski, Military University of Technology, Sensors 20(14):3988, July 2020, proposes a method based on the measure and visualization of the facial temperature for PA detection. This relies on a two-step deep learning based method, including head detector followed by a deep learning classifier.

However, this method encounters limitations when it comes to more sophisticated PA, such as PAs that are based on silicon or latex full facial masks.

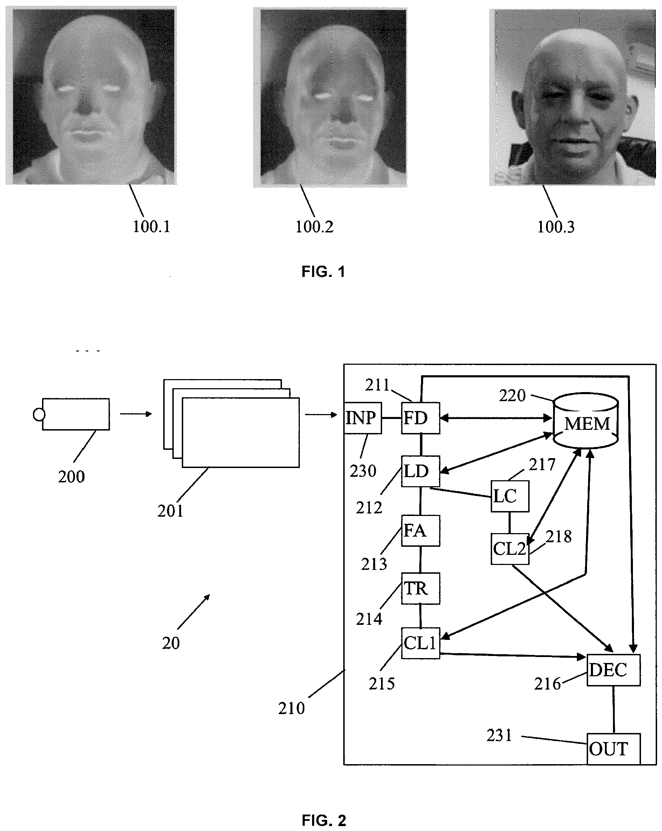

For example, referring to figure 1, there are shown three pictures of a person wearing a full latex facial mask as PAI. A first picture 100.1 is a thermal image acquired by a thermal infrared camera, such as the one used in the publication of the prior art identified above. In the first picture 100.1, the target person starts wearing the mask right before the first image 100.1 is acquired, which means that the mask is cold and the resultant thermal spectrum is not very contrasted: a thermally uniform shape and temperature is obtained, which seems fake. The first picture 100.1 can therefore be determined as spoof by presentation attack detection methods that are based on thermal images, such as the one described in the above reference publication.

However, on a second image 100.2, there is shown the same target person with the full latex facial mask, but with a warm mask, that is worn by the target person well before the second image 100.2 is taken by the thermal infrared camera.

A third image 100.3 shows a picture of the same target person acquired by a camera acquiring pictures in the visible domain.

As it can be observed, the second image 100.2 comprises more variations of temperature and is less thermally uniform. Therefore, a PA detection method using a thermal camera, such as the one described in the above publication, may fail to detect that the face of the target person is spoof, when processing the second image 100.2.

Therefore, there is a need for a presentation attack detection method that can detect several types of PAIs, including the most sophisticated types of PAIs such as full latex of silicon face masks. It is also preferable that the presentation attack detection method can be passive, and can be applied to distant target persons.

The invention aims at improving the situation.

## SUMMARY OF THE INVENTION

The present invention provides a solution for the aforementioned problems by a presentation attack detection method according to claim 1, a computer program according to claim 15, and a presentation attack detection device according to claim 16. In dependent claims, preferred embodiments of the invention are defined.

A first aspect of the invention concerns a presentation attack detection method for comprising:

- receiving at least one thermal image from a thermal camera;
- determining whether a face of a target person is detected in the thermal image or not;
- if the face of the target person is detected in the thermal image, performing a domain translation based on the thermal image to obtain an image in a second spectral domain, the second spectral domain being distinct form a thermal domain;
- determining a first category indicating whether the target person is live or spoof, based on the image in the second spectral domain;
- determining a final decision representative of the liveness of the target person, based on the determined first category and/or based on whether the face of the target person is detected in the thermal image.

The invention integrates successive face detection and domain translation, which allows to detect a large panel of PAIs, including full face mask in latex or silicon, because of the detection of heat emission disturbance. Indeed, the image synthesized in the second spectral domain highlights relevant information revealing/disproving the liveness of the target person. As the invention relies on several decisions grouped in a final decision, the method is robust to various PAIs.

According to some embodiments, the method may further comprise performing a canonical face alignment of the thermal image to obtain a first cropped thermal image, and the domain translation may be performed on the first cropped thermal image to obtain the image in the second spectral domain.

Therefore, the target person does not need to be positioned at a given distance and in front of the thermal camera, and the invention can be integrated in passive facial recognition systems.

In complement, the method may further comprise, if the face of the target person is detected in the thermal image, detecting at least one landmark of the face of the target person, the domain translation may be performed if the face of the target person is detected and if at least one landmark of the face of the target person is detected, and the final decision may be further based on whether at least one landmark of the face of the target person is detected in the thermal image.

Therefore, the detection of landmark can be taken into account with the face detection to detect some PAIs, which makes the invention more robust for the detection of a large panel of PAIs.

In complement, the canonical face alignment may be based on the detected at least one landmark of the face of the target person. This enables to improve the accuracy of the face alignment, and avoids requesting the target person to be precisely positioned in front of the thermal camera.

According to some embodiments, the domain translation may be performed by applying a model, the model being arranged for determining images in the second spectrum domain for respective thermal images received as inputs.

The model may be obtained by machine learning, which allows to increase the accuracy associated with the domain translation operation. The model may be a generative model for example. Alternatively, the model may be a diffusion model.

In complement, the model may be arranged to perform super resolution to receive thermal images with a first resolution as input, and to output an image in the second spectral domain with a second resolution being higher than the first resolution.

This enables to process low resolution thermal images, which makes the invention compatible with low-cost thermal cameras and/or which allows the target person to be positioned remotely from the thermal camera. Performing the domain translation at different resolution is synonymous to being deployable in the real world as it does not require people to stand still at a specific distance for example.

Alternatively or in complement, the model may have an encoder-decoder structure based on a pyramidal architecture. This allows a multi-scale analysis to generate a high-resolution image in the second spectral domain. The accuracy associated with the determination of the first category is then increased.

Alternatively or in complement, the method may further comprise a preliminary step of training the model using a generative adversarial network, and the generative model may be trained by a discriminator, using at least one adversarial loss function. This enables to generate realistic images in the second spectral domain.

In complement, the model may be trained by the discriminator using a global adversarial loss function and at least one local adversarial loss function. This enables to generate images in the second spectral domain that are globally realistic, and that are also realistic for specific parts of the face, such as parts that have biometrical significance.

Alternatively or in complement, the model may be further trained based on at least one additional loss function among a L1 loss function, a perceptual loss function and an identity loss function. This enables to preserve the perceptive rendering of the image, preserve the biometrics identity-specific features and enforce the consistent age-gender reconstruction.

According to some embodiments, the model may be trained by supervised learning on a set of training data comprising thermal images having several first resolutions associated with images in the second spectral domain having a second resolution, the second resolution being higher than the first resolutions.

The model may therefore process thermal images as inputs with variable low resolutions, which allows to determine liveness of target persons positioned at variable distances from the thermal camera. The method is therefore robust and compatible with low-cost sensors. It can be adaptive to real world scenarios as the face detection can operate in a wide range of conditions and the domain translation accepts various thermal image resolutions/qualities.

According to some embodiments, the second spectral domain may be the visible domain. Therefore, the synthesized visible image brings relevant information that is discernible by a classification model, such as a deep neuronal network classifier, for PAD.

According to some embodiments, the method may further comprise, if the face of the target person is detected in the thermal image, determining a second category indicating whether the target person is live or spoof based on the thermal image; and the final decision may be further based on the second category. This enables to detect a large panel of PAIs. In addition, this enables to differentiate between several types of PAIs when it is detected that the face of a target person is spoof.

In complement, the first category may be determined by a first classification module and the second category may be determined by a second classification module, based on respective classification models.

This enables to detect a large panel of PAIs, based on different classification models processing images in different spectral domains. The method is therefore robust to very different types of PAIs.

A second aspect of the invention concerns a computer program comprising instructions arranged for implementing the method according to the first aspect of the invention, when said instructions are executed by a processor.

A third aspect of the invention concerns a presentation attack detection device comprising:

- a receiving interface for receiving at least one thermal image;
- a face detection module configured to determine whether a face of a target person is detected in the thermal image or not;
- a domain translation module configured to perform a domain translation based on the thermal image to obtain an image in a second spectral domain, the second spectral domain being distinct form a thermal domain;
- a first classification module configured to determine a first category indicating whether the target person is live or spoof, based on the image in the second spectral domain;
- a decision module configured to determine a final decision representative of the liveness of the target person, based on the determined first category and/or based on whether the face of the target person is detected in the thermal image.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows thermal and visible images of a target person wearing a Presentation Attack Instrument such as a full facial mask.

Figure 2    This figure illustrates a presentation attack detection system according to some embodiments of the invention.

Figure 3    This figure shows a domain translation module according to some embodiments of the invention.

Figure 4    This figure shows a structure of a discriminator of a Generative Adversarial Network used to train a generative model for a domain translation module according to some embodiments of the invention.

Figure 5    This figure shows thermal images of a presentation attack based on two-dimensional instruments.

Figure 6    This figure shows thermal images of a presentation attack based on a facial mask.

Figure 7    This figure is a diagram showing steps of a presentation attack detection method according to some embodiments of the invention.

## DETAILED DESCRIPTION OF THE INVENTION

As it will be appreciated by one skilled in the art, aspects of the present invention may be embodied as a presentation attack detection method, device, or computer program.

Figure 1 shows a system 20 for presentation attack detection according to some embodiments of the invention.

The system comprises a frame capture device 200 such as a camera or a video camera, arranged to acquire at least one thermal image 201, and a presentation attack detection device 210. The frame capture device 200 is a thermal camera 200 according to the invention.

As explained previously, a thermal image 201 is an image in the MWIR or LWIR spectral domain.

The thermal camera 200 may acquire a series of thermal images 201, at a given frequency. For example, when the thermal images 201 are video frames, the frequency can be above one frame per second, fps, such as 24 frames per second for example. Alternatively, the thermal camera 200 is arranged to acquire thermal images 201 at a fixed frequency that is less than 1 fps or is arranged to acquired thermal images 201 when triggered by an event, for example when movement is detected.

The thermal camera 200 is arranged to acquire thermal images representing a scene in a field of view of the thermal camera, the field of view being static or dynamic. No restriction is attached to the resolution of the thermal images 201. The resolution depends on the sensitivity and the format of the sensor of the thermal camera 200.

The thermal camera 200 can be installed at an end user site, which can be at a building entrance, in front of a door, at a security gate of an airport or any other physical location. The scene that is represented in at least some of the frames of the sequence, represents at least a face of a target person. As it will be understood from what follows, some embodiments of the invention allows that the presentation attack detection device 210 is able to process thermal images 201 for a wide range of distances between the target person and the thermal camera 200, and not only for a fixed distance where the target person has to be precisely positioned in front of the thermal camera 200. This allows to use the presentation attack detection system 20 in passive applications, which require no active cooperation from the target person.

The presentation attack detection device 210 may comprise an input interface 230 that is arranged for receiving a thermal image 201 from the camera 200, or a series of thermal images 201 from the camera.

No restriction is attached to the presentation attack detection device 210, which can be any device comprising processing capabilities, or a processor, and a non-transitory memory. The presentation attack detection device 210 may for example be incorporated into a server, desktop computer, smart tablet, smart phone, mobile internet device, personal digital assistant, wearable device, image capture device or any combination thereof. The presentation attack detection device 210 comprises fixed-functionality hardware logic, configurable logic, logic instructions, etc, or any combination thereof.

In addition, no restriction is attached to a communication link between the thermal camera 200 and the presentation attack detection device 210, on which the thermal images are transmitted. The communication link can for example be a wireless link, or a wired link. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

The presentation attack detection device 210 comprises a plurality of modules 211 to 218, some of them being optional as explained in what follows, the modules being hardware modules or software modules.

A face detection module 211 is arranged to determine whether a face of a target person is comprised in a thermal image 201 received from the thermal camera.

No restriction is attached to the face detection module 211, which can be based on a first model that is arranged to classify an input image in two categories "face" and "no face", the first model being built in an analytical way, or based on machine learning. The first model can for example be a machine learning model, such as a neuronal network, trained by supervised learning on a first set of training data comprising first reference thermal images, each first reference thermal image being associated with a label "face" if the first reference thermal image comprises a face of a target person, and a label "no face" if the first reference thermal image does not comprise any face of a target person.

The first model can be stored in a memory 220 of the presentation attack detection device 210 or in an internal memory of the face detection module 211.

Preferably, the first model is trained so as to be robust to several conditions such as pose, expression, occlusion, poor thermal image quality and long-range distance of the target person. To this end, the first set of training data comprises reference thermal images that are acquired in varied conditions of pose, expression, occlusion, quality and distance of the target person.

The face detection module 211 is therefore arranged to receive a thermal image and to determine whether the thermal image comprises a face or not. If not, the thermal image can be discarded and the category "no face" can be indicated to a decision module 216. If a face of a target person is detected, the face detection module 211 transmits the thermal image 201 to the next module for further processing. In addition, the face detection module 211 may transmit the category "face" to the decision module 216.

The presentation attack detection device 210 may further comprise a facial landmark detection module 212 that is arranged to determine at least one landmark, and preferably several landmarks, of a face that is detected by the face detection module 211 in the thermal image 201.

Facial landmark detection generally involves at least one of the following landmarks, or any combination of the following landmarks: eyes, nose, mouth and chin. In what follows, it is considered for illustrative purposes that the facial landmark detection aims at determining the above listed landmarks.

To this end, the face detection module 211 may process the thermal image 201 based on a second model, that is arranged to identify the above landmarks based on the thermal image 201 received from the face detection module 211. The second model may be analytically built or may be obtained based on machine learning.

Some examples of facial landmark detection models based on machine learning are known, that is a predictive model under the form of a neuronal network, in particular a Convolutional Neuronal Network, CNN. Similar models can be trained by supervised learning based on a second set of training data comprising thermal images labelled with reference coordinates of landmarks, to obtain the second model.

The facial landmark detection module 212 may also determine an information to indicate whether a landmark has been detected or not in the thermal image. If no landmark has been detected, the thermal image can be discarded and the information "no landmark detected" can be indicated to a decision module 216. If one or several landmarks have been detected, the facial landmark detection module 212 transmits the thermal image 201 to the next module for further processing. In addition, the facial landmark detection module 212 may transmit the information "landmark" to the decision module 216.

Therefore, both the face detection module 211 and the facial landmark detection module 212 may act as pre-filtering modules, to detect some simple PAIs that do not need further processing.

According to some embodiments, the face detection module 211 and the facial landmark detection module 212 are one and the same module, that can determine simultaneously the landmarks of a face, in case a face is detected in the thermal image 201, or can determine that the thermal image 201 comprises no face of a target person, based on a single face and landmark detection model.

Once the landmarks are detected in the thermal image, the thermal image may be transmitted with the coordinates of the landmarks, and optionally with geometrical information of the landmarks, by the landmark detection module 212 to a face alignment module 213. According to some embodiments of the invention, the thermal image and the landmarks are also transmitted to an optional cropping module 217, or directly to a second classifying module 218, that will be described hereafter.

If some of the landmarks cannot be identified by the landmark detection module 212, the presentation attack detection device 210 may consider that the face of the target person is partially or fully shielded, and may discard the thermal image 201.

The facial alignment module 213 is arranged to crop the thermal image 201, based on the landmarks, to perform a canonical face alignment and obtain a first cropped thermal image to be transmitted to a domain translation module 214.

Depending on the distance between the target person and the thermal camera 200, the face of the target person may vary in size in the thermal image 201. Therefore, when cropping the thermal image to obtain the first cropped thermal image aligned on the canonical face of the target person, the resolution of the first cropped thermal image depends on the size of the face of the target person in the thermal image 201. The more distant the target person is, the lower the resolution of the first cropped thermal image.

Alternatively, the presentation attack detection device 210 is only arranged to process thermal images 201 for which the distance between the thermal camera 200 and the face of the target person is in a reduced interval of distances, such as an interval between a first distance of 1 meter and a second distance of 1,5 meter for example. If the target person is located at a distance lower than 1 meter or higher than 1,5 meter, then the thermal image 201 is not processed by the presentation attack detection device 210. According to this alternative, the resolution of the first cropped thermal image obtained by the face alignment module 213 is fixed.

The first cropped thermal image is then passed to the domain translation module 214. The cropping function performed by the face alignment module 213 can be performed by the landmark detection module 212. In that case, the presentation attack detection device 210 does not comprise the face alignment module 213, and the first cropped thermal image is passed from the landmark detection module 212 to the domain translation module 214. The domain translation module 214 is arranged to translate the cropped thermal image, which is in a first spectral domain such as a MWIR or LWIR spectral domain, to an image in a second spectral domain. To this end, the domain translation may be based on a third model that is generative, arranged to receive images in the first spectral domain and to predict, or generate, a corresponding image in the second spectral domain. To do this, the third model may be a generative model or diffusion model obtained by machine learning, for example by supervised learning based on a third set of data comprising pairs of a thermal image, labelled with a corresponding reference image in the second spectral domain. The third model is trained so as to minimize at least one loss function calculated based on the predicted image in the second spectral domain and the reference image in the second spectral domain.

Preferably, the third model is arranged to process first cropped thermal images having different resolutions, and not only one given fixed resolution.

Preferably, the second spectral domain may be a visible domain. However, the domain translation module 214 is arranged to predict an image in a second spectral domain that is different from the visible domain. For example, the second spectral domain may be another infrared domain, such as the NIR or SWIR spectral domain for example.

The domain translation enables to perceive any artefacts or defects that cannot be perceived in the thermal domain.

In what follows, it is considered, for illustrative purposes only, that the second spectral domain is the visible domain.

Preferably, the third model is trained to preserve identity information contained in the first cropped thermal image, in the predicted visible image.

Also, according to some embodiments, the third model is trained to enhance the resolution of the first cropped thermal image, which can be a low resolution because of the thermal camera 200 and because of the distance of the target person, to obtain a high-resolution visible image. The capacity to predict a high-resolution image based on a low-resolution image is called super resolution and will be explained hereafter.

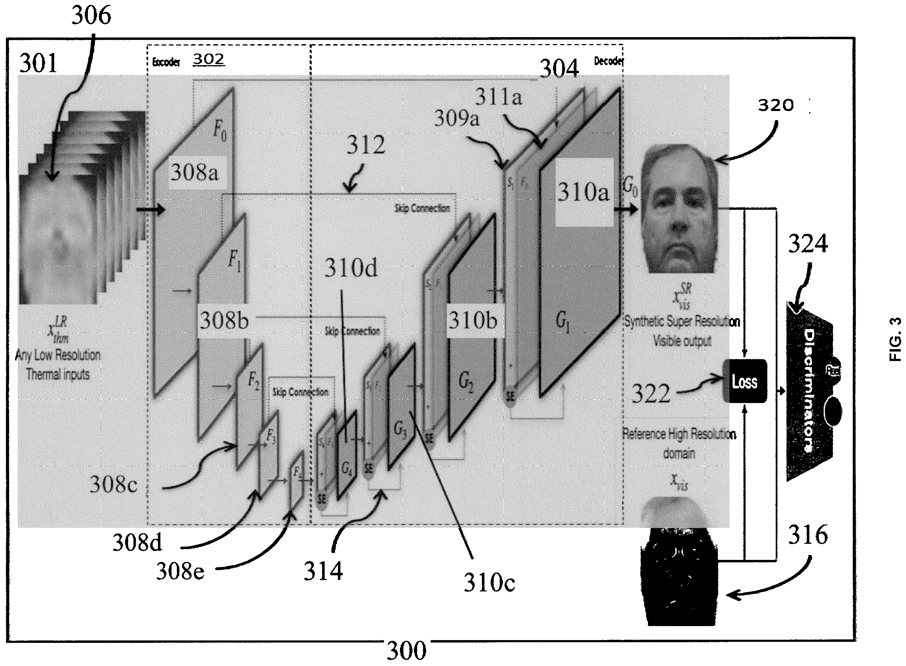

A detailed example of the third model that allows both spectral domain translation and super resolution will be further described with reference to figure 3.

The predicted visible image is passed by the domain translation module 214 to a first classification module 215.

The first classification module 215 is configured to receive a visible image as input comprising a face of a target person and to classify the visible image in one of the two categories "live", if the target person is considered a real person, or "fake" if a PA is detected.

To this end, the first classification module 215 may implement a fourth model, the fourth model being arranged to receive a visible image as input and to predict a category among the two categories "spoof' and "live" mentioned above. No restriction is attached to the fourth model, which can be analytical or which can be obtained based on machine learning. For example, the fourth model obtained based on machine learning may be a neuronal network that is configured to extract features. An output layer of the fourth layer is configured to predict the category live or spoof based on the features extracted from the visible image. The fourth model may be trained by supervised learning based on a fourth set of training data, comprising reference images in the second spectral domain labelled with the category live or spoof.

The first classification module 215 is configured to transmit the category output by the fourth model, to the decision module 216.

The decision module 216 is configured to determine a final decision of the target person of the thermal image 201, as live or spoof, based at least on the category received from the first classification module 215 and/or based on the category received from the face detection module 211.

According to some other embodiments, the decision module 216 is configured to determine the final classification, or final decision, based on the category received from the first classification module 215 and/or based on the category received from the face detection module 211, and/or based on the information received from the facial landmark detection module 212, and/or based on a category received from a second classification module 218, that is described hereafter.

Indeed, according to these embodiments, after face detection and landmark detection, the landmark detection module 212 transmits the thermal image 201 and, optionally the coordinates of the landmarks, to a large face cropping module 217, which is arranged to crop the thermal image 201 to obtain a second cropped thermal image. The second cropped thermal image is cropped on a larger area than the first cropped thermal image, which is a canonical face alignment. For example:

- the canonical face alignment comprises only the face of the target person and no background, or less than 5% of background in the first cropped thermal image;
- the large face cropping comprises the face of the target person and more than 5% of background, for example more than 30% of background in the second cropped thermal image.

The large face cropping module 217 is configured to transmit the second cropped thermal image to the second classification module 218.

Alternatively, the function of large face cropping is performed by the landmark detection module 212, and, in that embodiment, the presentation attack detection device 210 does not comprise the large face cropping module 217. The second cropped thermal image is therefore transmitted from the landmark detection module 212 to the second classification module 218.

The second classification module 218 is configured to receive as input a thermal image, such as the second cropped thermal image, and to determine a category among the two categories "live" or "spoof'.

To this end, the second classification module 218 may implement a fifth model configured to receive as input a thermal image, such as the second cropped thermal image, and to classify the target person in the input thermal image in the category "live" or "spoof'.

No restriction is attached to the fifth model, which can be analytical, or which can be obtained based on machine learning.

For example, the fifth model obtained based on machine learning may be a neuronal network, such as a deep neuronal network, that is configured to extract features. An output layer of the fifth layer is configured to predict the category live or spoof based on the features extracted from the input thermal image.

The fifth model may be trained by supervised learning based on a fifth set of training data, comprising reference thermal images labelled with the category live or spoof.

The second classification module 218 is configured to transmit the determined category to the decision module 216.

It is to be noted that the modules 217 and 218 are optional according to the invention.

The decision module 216 is configured to determine a final decision based on the category received from, and/or further based on the category received from the face detection module 211 and/or the category received from the second classification module 218.

To this end, the decision module 216 may apply a predetermined fusion function to determine a PAD score based on the at least one received category. The final decision can then be determined based on the PAD score. For example, the final decision may comprise a binary information indicating "live" or "spoof" for the target person comprised in the thermal image 201.

The final decision may further comprise a PAI identifier, in case where the binary indicates "spoof", the PAI identifier identifying the instrument used by the target person during the PA. The PAI identifier may be determined based on the PAD score, or based on predetermined rules applied to the categories, when a category is received from the first classification module 216, and at least another category is received from the face detection module 211 and/or from the second classification module 218.

The final decision determined by the decision module 216 may be transmitted to an external entity via an output interface 231, and/or may be stored in the memory 220 of the presentation attack detection device 210.

For example, the final decision may be transmitted to a face recognition device, along with the thermal image 201. If the thermal image 201 is considered as live, the face recognition device may compare the thermal image 201, or features of the thermal image 201, with features from reference images of a database, to identify the target person in the thermal image 201.

Alternatively, face recognition may be performed by the presentation attack detection device 210. For example, the presentation attack detection device 210 may store the database with the reference images associated with respective identity information of persons. If the final decision is spoof, the thermal image 201 can be discarded by the presentation attack detection device 210. If the final decision is live, the presentation attack detection device 210 may compare the thermal image 201, or features of the thermal image 201, with the reference image to determine identity information of the target person in the thermal image 201.

The face recognition operation is well known and is not further described in the present description.

Therefore, the invention allows to detect a large panel of PAs, including full latex or silicon masks, by using a face detector applied to a facial thermogram, followed by a domain translator.

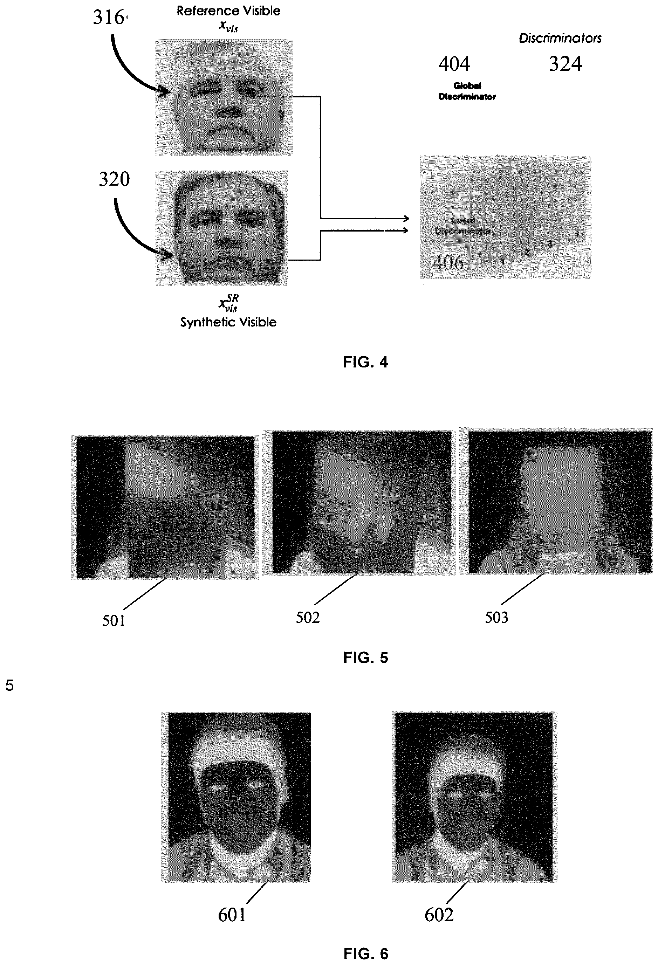

Indeed, when using PAIs such as a printed facial picture, a 2D or 3D mask, a smartphone or tablet as PAI, thermal cameras are challenged to acquire faces since radiations information are blocked in the thermal images which display thermally uniform shape and temperature, as it will be described from figures 4 and 5 that will be described hereafter.

Therefore, in that case, the face detection module 211 fails to detect a face, and plays the role of PA detector: the category "no face" transmitted to the decision module 216 can be interpreted as a PA based on the above listed PAIs.

For more advanced PAIs, for example based on a full latex or silicon face mask, a face is detected by the face detection module 211, and the thermal image is further processed by the other modules: the domain translation module 214 then generates an unrealistic image, including perceptual anomalies, that can be easily detected by the first classification module 215.

As explained above with reference to figure 1, when wearing a full facial mask, the mask warms up in contact with the skin, thus diffusing more uniformly the heat energy, compared to when the target person just wears it cold. Although the heat spreads over the face, higher energy is escaping from specific areas such as eyes, mouth and the neck. Such changes in the facial heat distribution appear as solid clues after domain translation by the domain translation module 214, because eyes and mouth areas are relevant biometrics identity features. Therefore, the change of such features disturbs the domain translation module 214, thus generating unrealistic faces that are classified as spoof by the first classification module 215.

In addition, as explained above, the domain translation module 214 may additionally receive thermal images with different resolutions, which allow the PAD to be performed in a passive way, without requiring cooperation from the target person.

The first to fifth models described above can be stored in the modules respectively implementing them, or can alternatively be stored in the memory 220 of the presentation attack detection device 210.

Figure 3 shows an example of the Generative Adversarial Network, GAN, 300 trained to obtain the third model used by the domain translation module 214 according to some embodiments of the invention.

The third model is also referred to as "ANYRES", and enables simultaneously performing face super resolution and thermal to a second spectral domain, such as visible, translation while being robust to any low-resolution thermal inputs while preserving the identity. Benefits from the simultaneous process helps to avoid accumulating both errors and artifacts generation and to simultaneously bridge the modality gap and resolution gap. In particular with reference to figure 3, blurry, thermal and low-resolution, LR, face images 306 are transformed into sharp, realistic, high-resolution visible face image 320, after the training process that is described hereafter.

The designed third model brings the advantages to preserve consistent biometrics features across both low/high resolution space and thermal/visible spectrum. Furthermore, the embodiments appear to be adaptive to real world scenarios as during operational applications humans are randomly distant from the camera and can therefore depict multi-scale LR thermal images (which depends on the acquisition distance). Unlike known technology, where the resolution is fixed as input, ANYRES highlights its ability to operate at any input resolution ranging from low to high resolution. In figure 3, the thermal images range from higher resolution to lower resolution across layers 308a to 308e of an encoder 302 of a generative adversarial network 300. The first layer 308a is arranged to receive a thermal image 306 as input.

Generally, in some embodiments, 308a to 308e are encoded layers rather than images. Each of 308a-e is not one respective image anymore. 308a would be a set of maps (which are also known as images, but the preferred technical term is a "map" at this stage). For example, 308a can have 16 maps, 308b can have 32 maps, and so on. The increasing number of maps is not mandatory, but it is typically an ensemble.

The GAN 300 further comprises a decoder 304, arranged to synthesize a visible image base on the maps received from the last layer 308e of the decoder 302.

After the training phase, the encoder 302 and the decoder 304 together form the third model, which is referenced 301, that can be implemented during a current phase, by the domain translation module 214. The third model 301 is trained as the generator part of the GAN 300.

The decoded synthetic visible output "images" or layers 310a-d (likewise, as noted with respect to 308a-e, will be sets of maps and not single images) ranging from higher resolution to lower resolution from 310a to 310d as shown using the decoder 304. In some embodiments as further detailed below, the third model performs the step of skip connection 312 between encoded infrared face images and the decoded high-resolution visible face images. In some embodiments, the third model will also perform the step of squeeze and excitation 314 between encoded infrared face images and the decoded high-resolution visible face images. In some embodiments, the GAN 300 will also use a reference visible image 316 to account for loss functions that are used to train the third model during the training phase.

In a GAN, a discriminator part is in charge of receiving a couple of images, and to determine which of the images is real, the other being synthesized.

The GAN therefore further comprises a discriminator 324, that implements one or several discriminator functions, and that aim at determining, which from the synthesized visible image 320 and the corresponding reference image 316, is real. If the discriminator 324 manages to guess that the visible image 320 has been synthesized, at least one change is made in the layers or connections to improve the process of synthesizing the visible image 320, and the training process is repeated by providing a new couple of images to the discriminator 324.

In addition, additional loss functions 322 that will be described hereafter can be used during the training process, and the third model 301 is configured to minimize the additional loss functions 322, or a combination of these functions, and to prevent the discriminator 324 to distinguish real visible images from synthesized images.

Figure 4 shows an example of discriminator 324 that can be used during the training phase of a third model of domain translation according to some embodiments of the invention.

The discriminator 324 may comprise a Global discrimination function 404 and Local discriminations functions 406. While global discriminator 404 helps generate the right identity overall, the local discriminators 406, named L1, L2, L3 and L4 are located on eyes, nose and mouth, respectively (of the reference visible image 316 and a synthetic visible image 320), are designed to focus on generated details of cross-spectral biometrics features and helps improve that identity by focusing on more biometric-relevant parts of the face.

The discriminator 324 therefore tries to determine which from the input images 316 and 320 is the real one, and which is one is synthetic.

Details of the problem formulation, layers, loss functions and discriminators used during the training phase of the third layer being the generator of the GAN 300, are given hereafter, for illustrative purposes.

We consider a high-resolution space, with dimensionality $m \times n$, incorporating a visible domain V with visible face images $x_{vis} \in R^{m \times n}$, and a thermal domain $T$ with thermal face images $X_{thm} \in R^{m \times n}$.

In what follows, $x_{vis}$ designates the reference visible image 316 that is paired with the synthesized visible image 320 in the third set of training data, which is noted $X^{SR}_{vis}$.

The third model 301 both consists in a domain translation phase and a super resolution phase.

In the domain translation phase, image-to-image translation is performed by learning an end-to-end non-linear mapping, denoted $\Theta_{t \to v}$, between the thermal spectrum and the visible spectrum. This is formalized as follows

$$\Theta_{t \to v} \; : \quad \mathcal{T} \quad \to \quad \mathcal{V} \qquad (1)$$
$$x_{thm} \quad \mapsto \quad x^{synthetic}_{vis}.$$

Consequently, $\Theta_{t \to v}$ is the function that synthesizes a thermal face images 306 into a realistic synthetic visible face images 320 $X^{SR}_{vis}$ in the high-resolution space.

In the super resolution phase, given the embedding of Equation (1) above, the third model 301, or network 301, encapsulates as a simultaneous task, the super resolution scalability. Therefore, during the training, the third model 301 learns a conditional generation function where thermal low resolution facial image $x^{LR}_{thm} \in \mathbb{R}^{\frac{m}{r} \times \frac{n}{r}}$ is also enhanced to the high-resolution scale, giving a synthetic visible image 320. $x^{SR}_{vis} \in \mathbb{R}^{m \times n}$ up-scaled by a $\times r > 0$ scale factor, via:

$$x^{SR}_{vis} = \Theta_{t \to v}(x^{LR}_{thm}). \qquad (2)$$

Domain translation, with the objective of being robust to any low-resolution thermal inputs, aims to learn an unified function that, when applied to any low-resolution thermal image $X^{LR}_{thm}$, yields a higher-resolution super resolved visible image with rich semantic and identity information. In this context, the third model according to the invention leans simultaneously the global interaction between both domain translation and resolution scalability through the enrichment of Equation (1) by Equation (2).

The GAN 300 is trained on a third set of training data, comprising thermal images for all scale factors $0 < r \leq m$, associated with reference images in the second spectral domain.

The third model 301 is based on a U-shape pyramidal architecture network, thus relying naturally on a multi-scale analysis. The overall architecture is illustrated in figure 3. In one implementation, a U-Net architecture is used for its efficiency, where the generator 301, or third model 301, consists of an encoder-decoder structure 302-304 with skip connections 312 between domain specific encoder 302 and decoder 304. Considering the larger discrepancy between the images resulted from LR and High Resolution, HR, spaces, the GAN 300 further uses Squeeze-and- Excitation, SE, blocks 314, which play the role of gate modulator after each skip connections process. With such strategy, channel-wise relationships bring flexible control and balances encoded features with decoded super-resolved features.

During training time, the generation 301 is fed simultaneously by batches of a wide range r-scale factor of low-resolution thermal images 306. Note that, in the extreme case where only one low scale of resolution is considered, with fixed r, the model would be able to super resolve thermal images from $\frac{m}{r} \times \frac{n}{r}$ to $m \times n$ scale of space (i.e., fixed low-resolution input unlike any low-resolution input). A model trained with one scale factor is called mono-resolution, whereas a model trained with several scale factor is called multi-resolution.

The encoder 302 can extract multi-resolution features in parallel and fuse them repeatedly during learning in order to generate high-quality SR-representations, 320, with rich semantic/identity information.

Given a LR thermal input image 306, a layer $H_0$ transforms it into a high-dimensional feature space:

$$F_0 = H_0(x_{thm}^{LR}). \qquad (3)$$

Here, $H_0$ refers to a composite function of two successive Convolution-Batch Normalization-ReLU layers. Then, the generator 301 applies a sequence of operations:

$$F_i = H_i(\text{Pool}(F_{i-1})), \qquad (4)$$

where $F_i$ represents the intermediate encoded feature maps after the i-th operation, for all $i \in [1,K]$ with $K \in \mathbb{N}^*$. Here, $H_i$ is the same composite function defined in Equation (3), and Pool denotes a max pooling operation where the most prominent features of the prior feature map are preserved. This is implemented for layers 308a through 308e.

The decoder 304 aims at transforming a high-dimensional feature space into an output super resolved image 320 in the visible domain. Hence, the generative task towards the super resolved images 320 is started from the deep level (U bottleneck) with Equation (5) below:

$$G_K = H_K(SE(C(F_{K-1}, S_K(F_K)))). \qquad (5)$$

Then sequentially incremented, for all $i \in [1, K-1]$, the layers 310a to 310c implement:

$$G_i = H_i(SE(C(F_{i-1}, S_i(G_{i+1})))), \qquad (6)$$

The decoding process ends with the generation of the visible image 320 through Convolution-Tanh layers, given by Equation (7) below:

$$G_0 = x_{vis}^{SR}. \qquad (7)$$

While S refers to upsampling operation of factor 2 followed by Convolution-BatchNormalization-ReLU layers, C concatenates all channels from the skip connection 312 $F_{i-1}$ (see 311a) with the up-sampled $S_i$ layers (see 309a). Finally, $G_i$ represents the decoded intermediate feature maps (see, for example, 310a) after the i-th operation preceded by Squeeze and Excitation SE 314.

The discriminator functions implemented by the discriminator 324 of the GAN 300 are detailed hereafter.

As explained above, the discriminator comprises global and local discriminators named $\text{Dis}_{\text{global}}$ and $\text{Dis}_{\text{local}}$ respectively. The former helps the above generator to synthesize photo-realistic HR image in the visible spectrum, whereas the latter (in some embodiments) pays attention to every single facial fine detail and benefits from local inherent attention to capture faithful biometric features during the generation.

Global Discriminator: In some embodiments, a multi-scale discriminator is used which enables generation of realistic images with refined details. The global discriminator 404 in figure 4, is responsible for performing a binary-classification by distinguishing a super resolved, or synthesized, visible image 320 $x^{SR}_{vis}$ from reference visible image $x_{vis}$. 316.

Local Discriminator: To synthesize biometric-realistic semantic content, the embodiments can focus on discriminative areas relevant for identity information, such as eyes, nose and mouth. Such regions of interests are represented by the same cropping area as shown in figure 4 between the images $x_{vis}$ and $x^{SR}_{vis}$ respectively titled $x^{SR}_{vis\text{-}ROI,i}$ with $i \in [0, 4]$. Each independent discriminator pays attention to every single facial fine detail and benefits from local inherent attention to capture faithful biometric features during the generation.

The adversarial learning process of the third model 301 can be further augmented by an efficient combination of objective functions and pave the way to control the synthesis process at both pixels and features levels.

On the one hand, the adversarial loss implemented by the discriminator 324, including global and local is responsible to make generative sample realistic and not distinguishable from real images in the target domain. And on the other hand, additional loss functions 322, described hereafter, such as the L1 loss drives the spectrum translation, while the perceptual loss, identity loss and attribute loss are used at high-level features to affect the perceptive rendering of the image, preserve the biometrics identity-specific features, and enforce the consistent age-gender reconstruction, respectively. All loss functions combined bring realism during spectral translation and avoid blurriness introduced by any low scale of resolution from thermal image inputs.

Regarding the adversarial loss, images generated by the third model through Equation (1) must be realistic. Therefore, the objective of the third model is to maximize the probability of the discriminator 324 making incorrect decisions. The objective of the discriminator 324, on the other hand, is to maximize the probability of making a correct decision, i.e., to effectively distinguish between real and synthesized images. The global loss function $\mathcal{L}_{GAN}^{Global}$ and local loss function $\mathcal{L}_{GAN}^{Local}$ are part of the adversarial training and defined as follows

$$\mathcal{L}_{GAN}^{Global} = \mathop{\mathbb{E}}_{x_{vis} \sim p_{\mathcal{V}}} [\log(\text{Dis}_{global}(x_{vis}))]$$
$$+ \mathop{\mathbb{E}}_{x_{vis}^{SR} \sim p_{\mathcal{V}}} [\log(1 - \text{Dis}_{global}(x_{vis}^{SR}))],$$

$$\mathcal{L}_{GAN}^{Local} = \sum_{i=0}^{4} \mathcal{L}_{GAN}^{Local,i},$$

where for all $i \in [0,4]$, local discriminator $L_i$ gives the associated loss

$$\mathcal{L}_{GAN}^{Local,i} = \mathop{\mathbb{E}}_{x_{vis-ROI,i} \sim p_{\mathcal{V}}} [\log(L_i(x_{vis-ROI,i}))]$$
$$+ \mathop{\mathbb{E}}_{x_{vis-ROI,i}^{SR} \sim p_{\mathcal{V}}} [\log(1 - L_i(x_{vis-ROI,i}^{SR}))],$$

then, the adversarial loss is denoted as follows.

$$\mathcal{L}_{GAN} = \mathcal{L}_{GAN}^{Global} + \mathcal{L}_{GAN}^{Local}. \qquad (8)$$

Additional loss functions 322 are described hereafter.

Setting a condition on the spectral distribution is advantageous for generating images within the target spectrum. The conditional loss, $L_{cond}$ or known as L1 loss, is defined as follows in Equation (9)

$$\mathcal{L}_{cond} = \mathop{\mathbb{E}}_{x_{vis}; x_{vis}^{SR} \sim p_{\mathcal{V}}} \|x_{vis}^{SR} - x_{vis}\|_1. \qquad (9)$$

The perceptual loss $L_P$ affects the perceptive rendering of the image by measuring the high-level semantic difference between synthesized and target face images. It reduces artifacts and enables the reproduction of realistic details. $L_P$ is defined as follows

$$\mathcal{L}_{P} = \mathop{\mathbb{E}}_{x_{vis}; x_{vis}^{SR} \sim p_{\mathcal{V}}} \|\phi_P(x_{vis}^{SR}) - \phi_P(x_{vis})\|_1, \qquad (10)$$

where, $\Phi_P$ represents features extracted by VGG-19, pre-trained on ImageNet.

The identity loss $L_I$ preserves the identity of the facial input and relies on a pre-trained ArcFace recognition network to extract facial features embedding. Then, cosine similarity measure provides the identity loss function:

$$\mathcal{L}_{I} = \mathop{\mathbb{E}}_{x_{vis}; x_{vis}^{SR} \sim p_{\mathcal{V}}} [1 - < \phi_I(x_{vis}), \phi_I(x_{vis}^{SR}) >], \qquad (11)$$

The attribute loss $L_A$ prevents attribute shift during domain translation. In particular, age and gender information are subtly not available on thermal images. While age brings apparent information, gender relies on identity. Therefore, apparent age loss $L^{Age}_A$ and gender loss $L^{Gender}_A$ are defined as follows:

$$\mathcal{L}^{Age}_A = \mathop{\mathbb{E}}_{x_{vis};x^{SR}_{vis}\sim p_V} \left\| \phi_{Age}(x^{SR}_{vis}) - \phi_{Age}(x_{vis}) \right\|_1; \quad (12)$$

$$\mathcal{L}^{Gender}_A = \mathop{\mathbb{E}}_{x_{vis};x^{SR}_{vis}\sim p_V} \left\| \phi_{Gender}(x^{SR}_{vis}) - \phi_{Gender}(x_{vis}) \right\|_1;$$

$$(13)$$

where $\phi_{Age}$ and $\phi_{Gender}$ are pre-trained models based on DeepFace facial attribute framework analysis. Then, the attribute loss is denoted as Equation (14) below:

$$\mathcal{L}_A = \mathcal{L}^{Age}_A + \mathcal{L}^{Gender}_A \qquad (14)$$

Finally, the overall loss function for the proposed third model 301 can be the combination or any combination of the aforementioned loss functions.

Figure 5 shows thermal images 501 to 503 of a presentation attack based on two-dimensional PA instruments.

On thermal images 501 and 502, there are shown presentation attacks where the target person holds a paper representing the face of another person.

On thermal image 503, there is shown a presentation attack where the target person holds a tablet on which a face of another person is displayed.

As it can be seen, acquiring thermal images enables to easily detect two-dimensional PAs, because no face is detected by the face detection unit 211 receiving the thermal images 501 to 503. The decision module 216 can then detect a PA based on a two-dimensional PAI.

Figure 6 shows PAs based on a paper 3D mask. On thermal image 601, the person starts wearing the paper 3D mask, which is therefore cold. On thermal image 602, it shows the same person with the same paper 3D mask after a certain amount of time of wearing the mask.

Acquiring a thermal image enables to show a high contrast between hair, eyes and the region of the face wearing the mask, which can be detected by the second classification module 218 processing thermal images, but also by the first classification module 215, after domain translation.

The decision module 216 can therefore detect a PA based on a 3D paper mask.

For more advanced attacks, such as the ones based on full face latex or silicon masks shown on figure 1, the use of thermal images combined with domain translation, allows the first classification module 215 to detect that the target person is spoof.

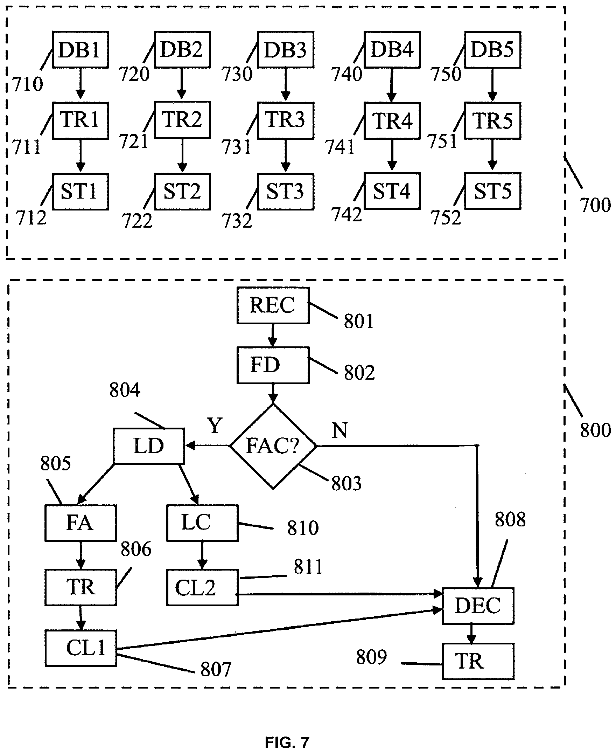

The decision module 216 can therefore detect a PA based on full face latex of silicon masks. Figure 7 shows steps of a method for liveness determination according to some embodiments of the invention.

The method comprises a preliminary phase 700 to build the one or several models that are stored in the presentation attack detection device 210 previously described.

At step 710, the first set of training data can be obtained, as previously explained.

The first model can be trained at step 711 based on the first set of training data. Alternatively, the first model is not obtained based on machine learning, but is analytically obtained.

The obtained first model is then stored at step 712 in the face detection module 211 or in the memory 220 of the presentation attack detection device 210.

As explained above, the first model is arranged to receive a thermal image and to determine whether a face is detected or not in the thermal image.

At step 720, the second set of training data can be obtained, as previously explained.

The second model can be trained at step 721 based on the second set of training data. Alternatively, the second model is not obtained based on machine learning, but is analytically obtained.

The obtained second model is then stored at step 722 in the landmark detection module 212 or in the memory 220 of the presentation attack detection device 210.

As explained above, the second model is arranged to receive a thermal image in which a face has been detected, and to determine at least one landmark in the thermal image.

At step 730, the third set of training data can be obtained, as previously explained.

The third model can be trained at step 731 based on the third set of training data. A detailed example of training of the third model has been described when referring the figures 3 and 4 above.

The obtained third model is then stored at step 732 in the domain translation module 214 or in the memory 220 of the presentation attack detection device 210.

As explained above, the third model is arranged to receive a thermal image and to output a corresponding image in the second spectral domain, such as a visible image.

At step 740, the fourth set of training data can be obtained, as previously explained.

The fourth model can be trained at step 741 based on the fourth set of training data. Preferably, the fourth model can be a neuronal network, such as a deep neuronal network. Alternatively, the fourth model is not obtained based on machine learning, but is analytically obtained.

The obtained fourth model is then stored at step 742 in the first classification module 215 or in the memory 220 of the presentation attack detection device 210.

As explained above, the fourth model is arranged to receive an image in the second spectral domain, such as a visible image, and to output a category live or spoof based on the visible image.

At step 750, the fifth set of training data can be obtained, as previously explained.

The fifth model can be trained at step 751 based on the fifth set of training data. Preferably, the fifth model can be a neuronal network, such as a deep neuronal network. Alternatively, the fifth model is not obtained based on machine learning, but is analytically obtained.

The obtained fifth model is then stored at step 752 in the second classification module 218 or in the memory 220 of the presentation attack detection device 210.

As explained above, the fifth model is arranged to receive a thermal image and to output a category live or spoof based on the thermal image.

The preliminary phase may be implemented in a device, comprising processing capabilities and a memory, that is external to the presentation attack detection device 210.

The method further comprises a current phase 800 that is implemented by the presentation attack detection device 210 according to some embodiments of the invention.

At step 801, the presentation attack detection device 210 receives at least one thermal image 201 from the thermal camera 200, via the input interface 230.

At step 802, the face detection module 211 applies the first model to the received thermal image, to determine whether a face is detected or not in the thermal image 201.

At step 803, if a face is detected, the face detection module 211 forwards the thermal image 201 to the landmark detection module 212. As explained above, the face detection module 201 and the landmark detection module 212 may be one and the same module so that the thermal image 201 is not forwarded between two different modules. If a face is not detected, the method goes to step 808.

In addition, at step 803, the face detection module 211 transmits a category among "face" and "no face" to the decision module 216.

At step 804, the landmark detection module 212 determines whether at least one landmark is detected in the thermal image 201, as previously described, by applying the second model to the thermal image 201. The information indicating whether the at least one landmark is detected or not is transmitted to the final decision module 216.

At step 805, the face alignment module 213 performs a canonical face alignment on the thermal image 201, based on the at least one landmark detected by the landmark detection module 212, to obtain the first cropped thermal image.

At step 806, the domain translation module 214 translates the first cropped thermal image in the second spectral domain, such as in the visible domain, by applying the third model, as previously explained.

At step 807, the first classification module 215 applies the fifth model to the image in the second spectral domain to determine a category among "spoof" and "live", and transmits the determined category to the decision module 216.

At step 808, the decision module 216 determines a final classification, or final decision, of the target person of the thermal image 201, as live or spoof, based at least on the category received from the first classification module 215, and optionally based on the category received from the face detection module 211. The final decision may be further based on the category received from the second classification module 218, described at steps 810 and 811 hereafter, according to some embodiments.

At step 809, the liveness determination device 211 may transmit the final decision to an external entity, via the output interface 231.

The large face cropping module 217 crops the thermal image 201 to obtain a second cropped thermal image at step 810.

At step 811, the second classification module 218 applies the fifth model to the second cropped thermal image to determine a category among spoof or live, as previously described. The second classification module 218 also transmits the determined category to the decision module, to take the final decision at step 808.

Therefore, the invention allows to perform PA detections by using solely a thermal camera 200. Unlike the visible spectrum, thermal radiations highlight PAI. For example, spoofing masks are spectrally characterized via heat energy disturbances, even if the instrument is warming. Therefore, the invention takes advantage of the heat disturbances, measures and visualization to determine liveness with the help of successive face detection and domain translation.

The face detection plays the role of detecting a bone fide face in a wide range of conditions as a preliminary PAD filter, while the domain translation is dedicated to translate a thermal face image into a synthetic face within another domain, along with preserving the identity. Then, the resulting synthetic facial image in the second spectral domain brings relevant information to the fourth model used by the first classification module, for PAD.

Due to unnatural distribution of facial temperature, a spoof facial image will highlight a non-consistent perceptual translated image (in the second spectral domain) with many artefacts. Furthermore, the invention is adaptive to real-world scenario as the face detection can operate in a wide range of conditions, and the domain translation accepts thermal images with various resolutions/qualities according to some embodiments of the invention.

This makes the invention a robust PAD solution for all types of spoofs, including heated masks, while providing a solution for liveness determination without additional sensor.

The invention is based on real-life PAs and benefits from a multi-channel decision, which avoids error, thus achieving robust PAD capability. In addition, thermal cameras are increasingly deployed.

The example embodiments are described in sufficient detail to enable those of ordinary skill in the art to embody and implement the systems and processes herein described. It is important to understand that embodiments can be provided in many alternate forms and should not be construed as limited to the examples set forth herein.

**Claims**

1. A presentation attack detection method comprising:

   - receiving (801) at least one thermal image (201) from a thermal camera (200);
   - determining (802) whether a face of a target person is detected in the thermal image or not;
   - if the face of the target person is detected in the thermal image, performing (806) a domain translation based on the thermal image to obtain an image in a second spectral domain, the second spectral domain being distinct form a thermal domain;
   - determining (807) a first category indicating whether the target person is live or spoof, based on the image in the second spectral domain;
   - determining (808) a final decision representative of the liveness of the target person, based on the determined first category and/or based on whether the face of the target person is detected in the thermal image.

2. The method according to claim 1, further comprising performing (805) a canonical face alignment of the thermal image (201) to obtain a first cropped thermal image, and wherein the domain translation is performed (806) on the first cropped thermal image to obtain the image in the second spectral domain.

3. The method according to claim 1 or 2, further comprising, if the face of the target person is detected (802) in the thermal image (201), detecting (804) at least one landmark of the face of the target person wherein the domain translation is performed if the face of the target person is detected and if at least one landmark of the face of the target person is detected, and wherein the final decision is further based on whether at least one landmark of the face of the target person is detected in the thermal image.

4. The method according to claims 2 and 3, the canonical face alignment is based on the detected at least one landmark of the face of the target person.

5. The method according to one of the preceding claims, wherein the domain translation is performed (806) by applying a model (301), the model being arranged for determining images in the second spectrum domain for respective thermal images received as input.

6. The method according to claim 5, wherein the model (301) is arranged to perform super resolution to receive thermal images with a first resolution as input, and to output an image in the second spectral domain with a second resolution being higher than the first resolution.

7. The method according to claim 5 or 6, wherein the model (301) has an encoder-decoder structure based on a pyramidal architecture.

8. The method according to one of claims 5 to 7, comprising a preliminary step (731) of training the model (301) using a generative adversarial network (300), wherein the generative model is trained by a discriminator (324), using at least one adversarial loss function (404; 406).

9. The method according to claim 8, wherein the model (301) is trained by the discriminator (324) using a global adversarial loss function (404) and at least one local adversarial loss function (406)

10. The method according to claim 8 and 9, wherein the model (301) is further trained based on at least one additional loss function (322) among a L1 loss function, a perceptual loss function and an identity loss function.

11. The method according to one of claims 8 to 10, wherein the model (301) is trained by supervised learning on a set of training data comprising thermal images having several first resolutions associated with reference images in the second spectral domain having a second resolution, the second resolution being higher than the first resolutions.

12. The method according to one of the preceding claims, wherein the second spectral domain is the visible domain.

13. The method according to one of the preceding claims, further comprising, if the face of the target person is detected in the thermal image, determining (811) a second category indicating whether the target person is live or spoof based on the thermal image (201); and wherein the final decision is further based on the second category.

14. The method according to claim 13, wherein the first category is determined (807) by a first classification module (215) and the second category is determined (811) by a second classification module (218), based on respective classification models.

15. A computer program comprising instructions arranged for implementing the method according to one of the preceding claims, when said instructions are executed by a processor.

16. A presentation attack detection device (210) comprising:

   - a receiving interface (230) for receiving at least one thermal image (201);
   - a face detection module (211) configured to determine whether a face of a target person is detected in the thermal image or not;
   - a domain translation module (214) configured to perform a domain translation based on the thermal image to obtain an image in a second spectral domain, the second spectral domain being distinct form a thermal domain;
   - a first classification module (215) configured to determine a first category indicating whether the target person is live or spoof, based on the image in the second spectral domain;
   - a decision module (216) configured to determine a final decision representative of the liveness of the target person, based on the determined first category and/or based on whether the face of the target person is detected in the thermal image.

100.1          100.2          100.3

**FIG. 1**

**FIG. 2**

FIG. 3

316'

Reference Visible
$x_{vis}$

Discriminators

404                 324

Global
Discriminator

320

Local
Discriminator

406        1    2    3    4

$x_{vis}^{SR}$
Synthetic Visible

**FIG. 4**

501                502                503

**FIG. 5**

601                602

**FIG. 6**

FIG. 7

Europäisches
Patentamt
European
Patent Office
Office européen
des brevets

# EUROPEAN SEARCH REPORT

**Application Number**

EP 23 31 5289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID ANGHELONE ET AL: "Beyond the Visible: A Survey on Cross-spectral Face Recognition", ARXIV.ORG, CORNELL UNIVERSITY LIBRARY, 201 OLIN LIBRARY CORNELL UNIVERSITY ITHACA, NY 14853, 6 May 2022 (2022-05-06), XP091216887, 2 Formalization of CFR; 5.1 Face Preprocessing; 5.2 Deep Feature Extraction; * abstract; figures 7,10; table 3 * | 1-16 | INV. G06V40/40 G06V10/143 G06V40/16 G06V10/82 |

-----

**TECHNICAL FIELDS SEARCHED (IPC)**

G06V

The present search report has been drawn up for all claims

| Place of search | Date of completion of the search | Examiner |
|---|---|---|
| The Hague | 14 December 2023 | Nowbakht Irani, Ali |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOWALSKI**. A Study on Presentation Attack Detection in Thermal Infrared. *Military University of Technology, Sensors*, July 2020, vol. 20 (14), 3988